# EUROPEAN PATENT APPLICATION

(11) **EP 4 242 858 A1**
(43) Date of publication of application: **13.09.2023**
(21) Application number: 20963074.8
(22) Date of filing: 30.11.2020
(51) Int. Cl.: G06F 13/42, H01R 13/66

(54) **METHOD AND APPARATUS FOR RECOGNIZING MANNER OF INSERTION OF CONNECTOR**

(71) Applicant: Huawei Technologies Co., Ltd., Shenzhen, Guangdong 518129 (CN)
(72) Inventor: ZHANG, Zhenxing, Shenzhen, Guangdong 518129 (CN); LI, Xiaowei, Shenzhen, Guangdong 518129 (CN)
(74) Representative: Goddar, Heinz J.
(86) International application number: PCT/CN2020/132883
(87) International publication number: WO 2022/110186

(57) **Abstract**

This application provides a method and an apparatus for identifying an insertion manner of a connector. The method includes: A transmit end connector obtains feature information, and the feature information identifies a type of a second transmission channel (501); the transmit end connector sends the feature information through the second transmission channel (502); and a receive end connector receives the feature information through a first transmission channel (503). When the feature information corresponds to a first-type transmission channel, the receive end connector determines that a male end of a first connector is inserted into a female end of a second connector in a first direction (504a); or when the feature information corresponds to a transmission channel other than the first-type transmission channel, the receive end connector determines that a male end of a first connector is inserted into a female end of a second connector in a second direction (504b). The first direction is opposite to the second direction. According to the method and apparatus for identification, signal transmission efficiency of an interface can be improved.

## Description

### TECHNICAL FIELD

Embodiments of this application relate to communications technologies, and in particular, to a method and an apparatus for identifying an insertion manner of a connector.

### BACKGROUND

Generally, a pluggable connector includes a male end and a female end. The male end refers to a protruding side of an interface, and the female end refers to a concave side of the interface. By inserting a male end of one connector into a female end of another connector, the two connectors can be connected, thereby establishing a signal transmission link between the two connectors. Currently, interfaces of a connector are mostly a high-definition multimedia interface (high-definition multimedia interface, HDMI), a display port (display port, DP), a universal serial bus (universal serial bus, USB), and an apple lightning (apple lightning) cable.

As competition of electronic products is increasingly fierce, how to improve interface performance becomes a key technology for improving signal transmission efficiency.

### SUMMARY

Embodiments of this application provide a method and an apparatus for identifying an insertion manner of a connector, so that a dedicated transmission channel does not need to be additionally set to transmit feature information, thereby improving signal transmission efficiency of an interface.

According to a first aspect, an embodiment of this application provides a method for identifying an insertion manner of a connector. The method includes: receiving first feature information through a first transmission channel, where the first transmission channel is any one of a plurality of transmission channels included in an interface of the connector, the first transmission channel is a first-type transmission channel, the plurality of transmission channels are rotationally symmetric, and the interface of the connector is a male end of a first connector or a female end of a second connector; and when the first feature information corresponds to the first-type transmission channel, determining that the male end of the first connector is inserted into the female end of the second connector in a first direction; or when the first feature information does not correspond to the first-type transmission channel, determining that the male end of the first connector is inserted into the female end of the second connector in a second direction, where the first direction is opposite to the second direction.

The method in this embodiment of this application is applicable to a scenario in which the male end of the first connector is inserted into the female end of the second connector, but does not limit transmission directions of the first connector and the second connector. In other words, when the method for identifying an insertion manner of a connector provided in this embodiment of this application is implemented, the male end of the first connector (a transmit end connector) may send a signal, and the female end of the second connector (a receive end connector) may receive the signal, or the female end of the second connector (a transmit end connector) may send a signal, and the male end of the first connector (a receive end connector) may receive the signal. In addition, the plurality of transmission channels included in the male end of the first connector and the plurality of transmission channels included in the female end of the second connector are arranged in a same manner and are rotationally symmetric. This can ensure that all transmission channels of the first connector and the second connector can work normally regardless of whether the male end of the first connector is inserted into the female end of the second connector in the first direction or the second direction.

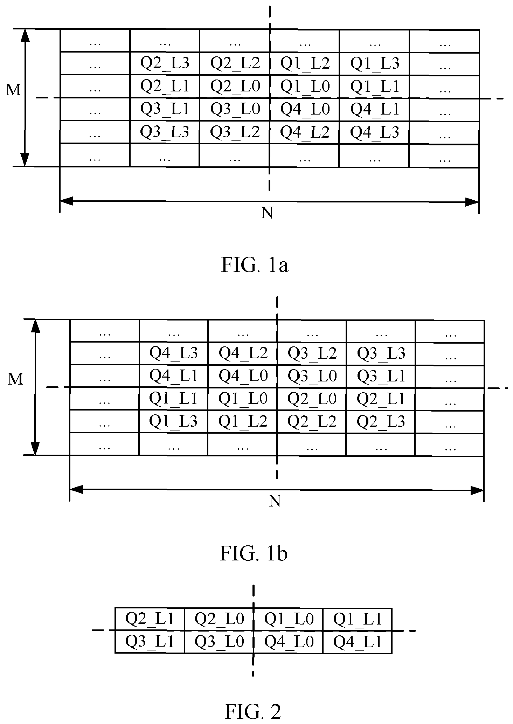

The first transmission channel is any one of the plurality of transmission channels included in the interface of the receive end connector. For example, as shown in FIG. 2, the interface of the connector includes eight transmission channels. To determine an insertion manner of two connectors, the receive end connector may implement the following steps according to any one of the transmission channels. To be specific, the receive end connector may detect feature information received on only one transmission channel, to determine the insertion manner of the connector. Optionally, the following steps may also be implemented according to eight (or less than eight) transmission channels. To be specific, the connector may simultaneously detect a plurality of or even all transmission channels, receive feature information on one or more of the transmission channels, and then determine the insertion manner of the connector based on the feature information. Regardless of how many transmission channels are selected, implementations of all transmission channels are the same. Therefore, one transmission channel (the first transmission channel) is used as an example below for description. For other transmission channels, reference may be made to the method. Details are not described again.

Similarly, in this embodiment of this application, the interface of the receive end connector and the interface of the transmit end connector are of a rotational symmetry structure. Therefore, the plurality of transmission channels included in the interface may be classified into a first-type transmission channel or a second-type transmission channel based on a rotational symmetry relationship between the transmission channels. Optionally, the plurality of transmission channels included in the interface of the receive end connector may also be classified into a plurality of types. In this embodiment of this application, the two rotationally symmetric transmission channels cannot be classified into a same type. For example, if Q1_L0 and Q3_L0 are rotationally symmetric, Q1_L0 and Q3_L0 need to be marked as different types; or if Q2_L1 and Q4_L1 are rotationally symmetric, Q2 L1 and Q4_L1 need to be marked as different types. Another policy for classification of types of the transmission channels is not specifically limited.

The plurality of transmission channels included in the interface of the receive end connector and the plurality of transmission channels included in the interface of the transmit end connector may be classified according to a same policy. In other words, a type of any one of the transmission channels in the interface of the transmit end connector is consistent with a type of a transmission channel in a corresponding position in the interface of the receive end connector.

When sending the feature information, the transmit end connector has assigned a value to the feature information according to a type of a second transmission channel. In this case, the receive end connector may distinguish, according to the value of the received feature information, a type of transmission channel corresponding to the feature information. For example, the feature information corresponds to the first-type transmission channel, indicating that the value of the feature information is consistent with a preset identifier value identifying a type of the first-type transmission channel. In this application, after the plurality of transmission channels included in the interface of the connector are classified, the identifier values of types of the transmission channels may be preset, and then classification information and the identifier values of the plurality of transmission channels are stored in a memory (for example, a cache of the connector, a memory, or another internal memory) of the connector, so that the connector directly reads the foregoing information from the memory when the information needs to be used. The plurality of transmission channels included in the interface of the receive end connector and the plurality of transmission channels included in the interface of the transmit end connector may be classified according to a same policy. When the type of the transmission channel (the second transmission channel) from which the feature information comes is consistent with the type of the transmission channel (the first transmission channel) that receives the feature information, it indicates that the male end of the first connector is inserted into the female end of the second connector in the first direction (for example, in a forward direction). When the type of the transmission channel (the second transmission channel) from which the feature information comes is inconsistent with the type of the transmission channel (the first transmission channel) that receives the feature information, it indicates that the male end is inserted into the female end of the second connector in the second direction (for example, in a reverse direction).

In other words, the receive end connector may classify, according to a same policy for classification of types as that of the transmit end connector, the plurality of transmission channels included in the interface. The value of the feature information is associated with a type of the transmission channel. Therefore, the value of the feature information transmitted on the first transmission channel by the receive end connector is expected. Therefore, if a value of actually received feature information (from the second transmission channel) is consistent with an expected value of the feature information, it indicates that the male end of the first connector is inserted into the female end in the first direction (for example, in the forward direction). If a value of actually received feature information (from the second transmission channel) is inconsistent with an expected value of the feature information, it indicates that the male end of the first connector is inserted into the female end of the second connector in the second direction (for example, in the reverse direction).

In a possible implementation, the first feature information is a sync header of a signal received on the first transmission channel, the first feature information is a handshake sequence received on the first transmission channel, or the first feature information is a heartbeat packet received on the first transmission channel.

In a possible implementation, the feature information may be carried in an existing signal.

Optionally, the feature information may be a sync header of a signal sent on the second transmission channel. For example, the signal includes two parts: the sync header (sync head) and data (data). For example, in FIG. 2, a preset value of the sync header used to identify the first-type transmission channel is 0011, and a preset value of the sync header used to identify the second type of transmission channel is 1010. Therefore, the transmit end connector may fill 0011 in a sync header of a signal sent on Q1_Ly or Q2_Ly, and fill 1010 in a sync header of a signal sent on Q3_Ly and Q4_Ly.

Optionally, the feature information may alternatively be a handshake sequence sent on the second transmission channel. For example, the handshake sequence is a sequence sent before a connection is established between the transmit end connector and the receive end connector. For example, in FIG. 2, a preset value of the handshake sequence identifying the first-type transmission channel is 5A5A5A5A, and a preset value of the handshake sequence identifying the second-type transmission channel is 3C3C3C3C. Therefore, the transmit end connector may send the handshake sequence 5A5A5A5A on Q1_Ly or Q2_Ly and send the handshake sequence 3C3C3C3C on Q3_Ly and Q4_Ly.

Optionally, the feature information may alternatively be a heartbeat packet sent on the second transmission channel. For example, the heartbeat packet is a heartbeat detection packet periodically or irregularly sent between the transmit end connector and the receive end connector after a connection is established. For example, in FIG. 2, a preset value of the heartbeat packet identifying the first-type transmission channel is 5A5A5A5A, and a preset value of the heartbeat packet identifying the second-type transmission channel is 3C3C3C3C. Therefore, the transmit end connector may send the heartbeat packet 5A5A5A5A on Q1_Ly or Q2_Ly, and send the heartbeat packet 3C3C3C3C on Q3_Ly and Q4_Ly.

It should be noted that in this embodiment of this application, in addition to transmitting the feature information by using the foregoing three types of signals, the feature information may also be sent by using another existing signal. This is not specifically limited herein.

In a possible implementation, the feature information may be carried in a newly added signal in this embodiment of this application. In other words, a new signal is added between the transmit end connector and the receive end connector, and the feature information is transmitted by using the new signal. A format and a transmission mechanism of the newly added signal are not specifically limited in this embodiment of this application.

In a possible implementation, the method further includes: obtaining second feature information, where the second feature information identifies a type of a second transmission channel, and the second transmission channel is any one of the plurality of transmission channels; and sending the second feature information through the second transmission channel.

The second transmission channel is any one of the plurality of transmission channels included in the interface of the transmit end connector. For example, as shown in FIG. 2, the interface of the connector includes eight transmission channels. To determine an insertion manner of two connectors, the transmit end connector may implement the following steps according to any one of the transmission channels. Optionally, the following steps may also be implemented according to eight (or less than eight) transmission channels. Regardless of how many transmission channels are selected, implementations of all transmission channels are the same. Therefore, one transmission channel (the second transmission channel) is used as an example below for description. For other transmission channels, reference may be made to the method. Details are not described again.

The feature information corresponds to the type of the second transmission channel, indicating that a value of the feature information is consistent with a preset identifier value identifying the type of the second transmission channel. In this application, after the plurality of transmission channels included in the interface of the connector are classified, the identifier values of types of the transmission channels may be preset, and then classification information and the identifier values of the plurality of transmission channels are stored in a memory (for example, a cache of the connector, a memory, or another internal memory) of the connector, so that the connector directly reads the foregoing information from the memory when the information needs to be used. For example, it is assumed that the type of the second transmission channel is the first-type transmission channel, and a preset value identifying the first-type transmission channel is 0011. When the value of the feature information is 0011, it is determined that the feature information corresponds to the type of the second transmission channel; or when the value of the feature information is not 0011, it is determined that the feature information does not correspond to the type of the second transmission channel. For another example, it is assumed that the type of the second transmission channel is the second-type transmission channel, and a preset value identifying the second-type transmission channel is 5A5A5A5A. When the value of the feature information is 5A5A5A5A, it is determined that the feature information corresponds to the type of the second transmission channel; or when the value of the feature information is not 5A5A5A5A, it is determined that the feature information does not correspond to the type of the second transmission channel.

In a possible implementation, the second feature information is a sync header of a signal sent on the second transmission channel, the second feature information is a handshake sequence sent on the second transmission channel, or the second feature information is a heartbeat packet sent on the second transmission channel.

In this embodiment of this application, the plurality of transmission channels included in the interface of the connector are rotationally symmetric. Therefore, regardless of whether the male end is inserted into the female end in the forward direction or inserted into the female end in the reverse direction, the plurality of transmission channels included in the female end are all connected to a corresponding transmission channel in the male end. In this way, when the male end is connected to the female end (that is, when the connectors are working), all transmission channels are working, so that utilization of the transmission channels can reach 100%, thereby improving utilization of the transmission channels. According to the interface, in this embodiment of this application, the feature information having a specific value is transmitted on the transmission channel, and the value of the feature information represents the type of the transmission channel. If the value of the received feature information is consistent with the type of the transmission channel that receives the feature information, it may be determined that the male end of the first connector is inserted into the female end of the second connector in the first direction. If the value of the received feature information is inconsistent with the type of the transmission channel that receives the feature information, it may be determined that the male end of the first connector is inserted into the female end of the second connector in the second direction. The transmission channel may be any one of the plurality of transmission channels included in the interface, and there is no need to additionally set a dedicated transmission channel to transmit the feature information, so that signal transmission efficiency on the interface can be improved.

According to a second aspect, an embodiment of this application provides a method for identifying an insertion manner of a connector. The method includes: obtaining second feature information, where the second feature information identifies a type of a second transmission channel, the second transmission channel is any one of a plurality of transmission channels included in an interface of the connector, the plurality of transmission channels are rotationally symmetric, and the interface of the connector is a male end of a first connector or a female end of a second connector; and sending the second feature information through the second transmission channel.

In a possible implementation, the second feature information is a sync header of a signal sent on the second transmission channel, the second feature information is a handshake sequence sent on the second transmission channel, or the second feature information is a heartbeat packet sent on the second transmission channel.

In a possible implementation, the sending, through the second transmission channel, the second feature information corresponding to the type of the second transmission channel includes: when the second transmission channel is a first-type transmission channel, sending, through the second transmission channel, the second feature information corresponding to the first-type transmission channel; or when the second transmission channel is a second-type transmission channel, sending, through the second transmission channel, the second feature information corresponding to the second-type transmission channel.

In a possible implementation, the method further includes: receiving first feature information through a first transmission channel, where the first transmission channel is any one of the plurality of transmission channels, and the first transmission channel is the first-type transmission channel; and when the first feature information corresponds to the first-type transmission channel, determining that the male end of the first connector is inserted into the female end of the second connector in a first direction; or when the first feature information does not correspond to the first-type transmission channel, determining that the male end of the first connector is inserted into the female end of the second connector in a second direction, where the first direction is opposite to the second direction.

In a possible implementation, the first feature information is a sync header of a signal received on the first transmission channel, the first feature information is a handshake sequence received on the first transmission channel, or the first feature information is a heartbeat packet received on the first transmission channel.

In a possible implementation, the first feature information corresponds to the first-type transmission channel, indicating that a value of the first feature information is consistent with a preset identifier value identifying a type of the first-type transmission channel.

In a possible implementation, the method further includes: obtaining a plurality of transmission channels; and separately classifying the plurality of transmission channels, where the plurality of transmission channels included in the male end of the first connector and the plurality of transmission channels included in the female end of the second connector are classified according to a same policy.

According to a third aspect, an embodiment of this application provides a method for identifying an insertion manner of a connector. The method includes: obtaining, by a transmit end connector, feature information, where the feature information identifies a type of a second transmission channel; sending, by the transmit end connector, the feature information through the second transmission channel; receiving, by a receive end connector, the feature information through a first transmission channel; and when the feature information corresponds to a first-type transmission channel, determining, by the receive end connector, that a male end of a first connector is inserted into a female end of a second connector in a first direction; or when the feature information corresponds to a transmission channel other than the first-type transmission channel, determining, by the receive end connector, that a male end of a first connector is inserted into a female end of a second connector in a second direction.

The method in this embodiment of this application is applicable to a scenario in which the male end of the first connector is inserted into the female end of the second connector, but does not limit transmission directions of the first connector and the second connector. In other words, when the method for identifying an insertion manner of a connector provided in this embodiment of this application is implemented, the male end of the first connector (the transmit end connector) may send a signal, and the female end of the second connector (the receive end connector) may receive the signal, or the female end of the second connector (the transmit end connector) may send a signal, and the male end of the first connector (the receive end connector) may receive the signal. In addition, the plurality of transmission channels included in the male end of the first connector and the plurality of transmission channels included in the female end of the second connector are arranged in a same manner and are rotationally symmetric. This can ensure that all transmission channels of the first connector and the second connector can work normally regardless of whether the male end of the first connector is inserted into the female end of the second connector in the first direction or the second direction.

The second transmission channel is any one of the plurality of transmission channels included in the interface of the transmit end connector. For example, as shown in FIG. 2, the interface of the connector includes eight transmission channels. To determine an insertion manner of two connectors, the transmit end connector may transmit the feature information according to any one of the transmission channels. Optionally, the feature information may also be transmitted according to eight (or less than eight) transmission channels. Regardless of how many transmission channels are selected, implementations of all transmission channels are the same. Therefore, one transmission channel (the second transmission channel) is used as an example below for description. For other transmission channels, reference may be made to the method. Details are not described again.

The interface of the transmit end connector is of a rotational symmetry structure. Therefore, the plurality of transmission channels included in the interface are separately classified into a first-type transmission channel or a second-type transmission channel based on a rotational symmetry relationship between the transmission channels. For example, as shown in FIG. 2, Q1_Ly and Q2_Ly are classified as first-type transmission channels, and Q3_Ly and Q4_Ly are classified as second-type transmission channels. Optionally, the plurality of transmission channels included in the interface may also be separately classified into a plurality of types. For example, as shown in FIG. 2, Q1_Ly is classified as a first-type transmission channel, Q2_Ly is classified as a second-type transmission channel, Q3_Ly is classified as a third-type transmission channel, and Q4_Ly is classified as a fourth-type transmission channel. In this embodiment of this application, the two rotationally symmetric transmission channels cannot be classified into a same type. For example, if Q1_L0 and Q3_LO are rotationally symmetric, Q1_L0 and Q3_L0 need to be marked as different types; or if Q2_L1 and Q4_L1 are rotationally symmetric, Q2_L1 and Q4_L1 need to be marked as different types. Another policy for classification of types of the transmission channels is not specifically limited.

The feature information corresponds to the type of the second transmission channel, indicating that a value of the feature information is consistent with a preset identifier value identifying the type of the second transmission channel.

In a possible implementation, the feature information may be carried in an existing signal.

Optionally, the feature information may be a sync header of a signal sent on the second transmission channel. For example, the signal includes two parts: the sync header (sync head) and data (data). For example, a preset value of the sync header used to identify the first-type transmission channel is 0011, and a preset value of the sync header used to identify the second type of transmission channel is 1010.

Optionally, the feature information may alternatively be a handshake sequence sent on the second transmission channel. For example, the handshake sequence is a sequence sent before a connection is established between the transmit end connector and the receive end connector. For example, a preset value of the handshake sequence identifying the first-type transmission channel is 5A5A5A5A, and a preset value of the handshake sequence identifying the second-type transmission channel is 3C3C3C3C.

Optionally, the feature information may alternatively be a heartbeat packet sent on the second transmission channel. For example, the heartbeat packet is a heartbeat detection packet periodically or irregularly sent between the transmit end connector and the receive end connector after a connection is established. For example, a preset value of the heartbeat packet identifying the first-type transmission channel is 5A5A5A5A, and a preset value of the heartbeat packet identifying the second-type transmission channel is 3C3C3C3C.

It should be noted that in this embodiment of this application, in addition to transmitting the feature information by using the foregoing three types of signals, the feature information may also be sent by using another existing signal. This is not specifically limited herein.

In a possible implementation, the feature information may be carried in a newly added signal in this embodiment of this application. In other words, a new signal is added between the transmit end connector and the receive end connector, and the feature information is transmitted by using the new signal. A format and a transmission mechanism of the newly added signal are not specifically limited in this embodiment of this application.

The first transmission channel is any one of the plurality of transmission channels included in the interface of the receive end connector. For example, the interface of the connector includes eight transmission channels. To determine an insertion manner of two connectors, the receive end connector may receive the feature information according to any one of the transmission channels. To be specific, the receive end connector may detect feature information received on only one transmission channel, to determine the insertion manner of the connector. Optionally, the feature information may also be received according to eight (or less than eight) transmission channels. To be specific, the connector may simultaneously detect a plurality of or even all transmission channels, receive feature information on one or more of the transmission channels, and then determine the insertion manner of the connector based on the feature information. Regardless of how many transmission channels are selected, implementations of all transmission channels are the same. Therefore, one transmission channel (the first transmission channel) is used as an example below for description. For other transmission channels, reference may be made to the method. Details are not described again. It should be noted that the first transmission channel and the second transmission channel may be a same transmission channel, or may be different transmission channels. This is not specifically limited in this embodiment of this application.

Similarly, as described above, the interface of the receive end connector is of a rotational symmetry structure. Therefore, the plurality of transmission channels included in the interface are separately classified into a first-type transmission channel or a second-type transmission channel based on a rotational symmetry relationship between the transmission channels. For classification of the transmission channels, refer to the foregoing description. Details are not described herein again.

When sending the feature information, the transmit end connector has assigned a value to the feature information according to the type of the second transmission channel. In this case, the receive end connector may distinguish, according to the value of the received feature information, a type of transmission channel from which the feature information comes. The receive end connector may classify, according to a same policy for classification as that of the transmit end connector, the plurality of transmission channels included in the interface. When the type of the transmission channel (the second transmission channel) from which the feature information comes is consistent with the type of the transmission channel (the first transmission channel) that receives the feature information, it indicates that the male end of the first connector is inserted into the female end of the second connector in the first direction (for example, in a forward direction). When the type of the transmission channel (the second transmission channel) from which the feature information comes is inconsistent with the type of the transmission channel (the first transmission channel) that receives the feature information, it indicates that the male end is inserted into the female end of the second connector in the second direction (for example, in a reverse direction).

In other words, the receive end connector may classify, according to a same policy for classification of types as that of the transmit end connector, the plurality of transmission channels included in the interface. The value of the feature information is associated with a type of the transmission channel. Therefore, the receive end connector has an expected value of the feature information for the first transmission channel. Therefore, if a value of actually received feature information (from the second transmission channel) is consistent with an expected value of the feature information, it indicates that the male end of the first connector is inserted into the female end in the first direction (for example, in the forward direction). If a value of actually received feature information (from the second transmission channel) is inconsistent with an expected value of the feature information, it indicates that the male end of the first connector is inserted into the female end of the second connector in the second direction (for example, in the reverse direction).

In this embodiment of this application, the feature information having a specific value is transmitted on the transmission channel, and the value of the feature information represents the type of the transmission channel. If the value of the received feature information is consistent with the type of the transmission channel that receives the feature information, it may be determined that the male end of the first connector is inserted into the female end of the second connector in the first direction. If the value of the received feature information is inconsistent with the type of the transmission channel that receives the feature information, it may be determined that the male end of the first connector is inserted into the female end of the second connector in the second direction. In one aspect, the transmission channel may be any one of the plurality of transmission channels included in the interface, and there is no need to additionally set a dedicated transmission channel to transmit the feature information, thereby improving utilization of the transmission channel on the interface.

According to a fourth aspect, an embodiment of this application provides a connection apparatus. The apparatus includes: a receiving module, configured to receive first feature information through a first transmission channel, where the first transmission channel is any one of a plurality of transmission channels included in an interface of a connector, the first transmission channel is a first-type transmission channel, the plurality of transmission channels are rotationally symmetric, and the interface of the connector is a male end of a first connector or a female end of a second connector; and a determining module, configured to: when the first feature information corresponds to the first-type transmission channel, determine that the male end of the first connector is inserted into the female end of the second connector in a first direction; or when the first feature information does not correspond to the first-type transmission channel, determine that the male end of the first connector is inserted into the female end of the second connector in a second direction, where the first direction is opposite to the second direction.

In a possible implementation, the first feature information is a sync header of a signal received on the first transmission channel, the first feature information is a handshake sequence received on the first transmission channel, or the first feature information is a heartbeat packet received on the first transmission channel.

In a possible implementation, the first feature information corresponds to the first-type transmission channel, indicating that a value of the first feature information is consistent with a preset identifier value identifying a type of the first-type transmission channel.

In a possible implementation, the apparatus further includes: an obtaining module, configured to obtain second feature information, where the second feature information identifies a type of a second transmission channel, and the second transmission channel is any one of the plurality of transmission channels; and a sending module, configured to send the second feature information through the second transmission channel.

In a possible implementation, the second feature information is a sync header of a signal sent on the second transmission channel, the second feature information is a handshake sequence sent on the second transmission channel, or the second feature information is a heartbeat packet sent on the second transmission channel.

In a possible implementation, the sending module is specifically configured to: when the second transmission channel is the first-type transmission channel, send, through the second transmission channel, the second feature information corresponding to the first-type transmission channel; or when the second transmission channel is a second-type transmission channel, send, through the second transmission channel, the second feature information corresponding to the second-type transmission channel.

In a possible implementation, the plurality of transmission channels included in the male end of the first connector and the plurality of transmission channels included in the female end of the second connector are classified according to a same policy.

According to a fifth aspect, an embodiment of this application provides a connection apparatus. The apparatus includes: an obtaining module, configured to obtain second feature information, where the second feature information identifies a type of a second transmission channel, the second transmission channel is any one of a plurality of transmission channels included in an interface of a connector, the plurality of transmission channels are rotationally symmetric, and the interface of the connector is a male end of a first connector or a female end of a second connector; and a sending module, configured to send the second feature information through the second transmission channel.

In a possible implementation, the second feature information is a sync header of a signal sent on the second transmission channel, the second feature information is a handshake sequence sent on the second transmission channel, or the second feature information is a heartbeat packet sent on the second transmission channel.

In a possible implementation, the sending module is specifically configured to: when the second transmission channel is the first-type transmission channel, send, through the second transmission channel, the second feature information corresponding to the first-type transmission channel; or when the second transmission channel is a second-type transmission channel, send, through the second transmission channel, the second feature information corresponding to the second-type transmission channel.

In a possible implementation, the apparatus further includes a receiving module, configured to receive first feature information through a first transmission channel, where the first transmission channel is any one of a plurality of transmission channels included in the interface of the connector, the first transmission channel is a first-type transmission channel, the plurality of transmission channels are rotationally symmetric, and the interface of the connector is a male end of a first connector or a female end of a second connector; and a determining module, configured to: when the first feature information corresponds to the first-type transmission channel, determine that the male end of the first connector is inserted into the female end of the second connector in a first direction; or when the first feature information does not correspond to the first-type transmission channel, determine that the male end of the first connector is inserted into the female end of the second connector in a second direction, where the first direction is opposite to the second direction.

In a possible implementation, the first feature information is a sync header of a signal received on the first transmission channel, the first feature information is a handshake sequence received on the first transmission channel, or the first feature information is a heartbeat packet received on the first transmission channel.

In a possible implementation, the first feature information corresponds to the first-type transmission channel, indicating that a value of the first feature information is consistent with a preset identifier value identifying a type of the first-type transmission channel.

In a possible implementation, the plurality of transmission channels included in the male end of the first connector and the plurality of transmission channels included in the female end of the second connector are classified according to a same policy.

According to a sixth aspect, an embodiment of this application provides a connector, including a processor and an interface, where the interface is configured to send or receive a signal, and the processor is configured to invoke one or more programs stored in a memory, to implement the method according to any one of the first aspect to the third aspect.

According to a seventh aspect, an embodiment of this application provides a computer-readable storage medium, including a program instruction. When the program instruction is executed on a computer or a processor, the computer or the processor is enabled to perform the method according to any one of the first aspect to the third aspect.

According to an eighth aspect, an embodiment of this application provides a computer program product, including a program instruction. When the program instruction is executed by a computer or a processor, the computer or the processor is configured to perform the method according to any one of the first aspect to the third aspect.

### BRIEF DESCRIPTION OF DRAWINGS

FIG. 1a is a schematic diagram of an example of a rotational symmetry structure according to an embodiment of this application;
FIG. 1b is a schematic diagram of an example of a rotational symmetry structure according to an embodiment of this application;
FIG. 2 is a structural diagram of an example of an interface of a connector according to an embodiment of this application;
FIG. 3 a is a schematic diagram of an example of a forward insertion manner according to this application;
FIG. 3b is a schematic diagram of an example of a reverse insertion manner according to this application;
FIG. 3c is a schematic diagram of an example of a Type-C male end according to an embodiment of this application;
FIG. 3d is a schematic diagram of an example of a Type-C female end according to an embodiment of this application;
FIG. 4 is a structural diagram of an example of a connector according to an embodiment of this application;
FIG. 5 is a flowchart of an example of a method for identifying an insertion manner of a connector according to an embodiment of this application;
FIG. 6 is a schematic diagram of an example of a signal according to an embodiment of this application;
FIG. 7 is a structural diagram of an example of an interface according to an embodiment of this application; and
FIG. 8 is a schematic structural diagram of an example of a connection apparatus according to an embodiment of this application.

### DESCRIPTION OF EMBODIMENTS

To make the objectives, technical solutions, and advantages of embodiments of this application clearer, the following clearly and completely describes the technical solutions in the embodiments of this application with reference to the accompanying drawings in the embodiments of this application. It is clear that the described embodiments are merely some but not all of the embodiments of this application. All other embodiments obtained by a person of ordinary skill in the art based on the embodiments of this application without creative efforts shall fall within the protection scope of the embodiments of this application.

In the embodiments, claims, and accompanying drawings of this application, the terms "first", "second", and the like are merely intended for a purpose of distinguishing and description, and shall not be understood as an indication or implication of relative importance or an indication or implication of an order. Moreover, the terms "include", "have", or any other variant thereof are intended to cover non-exclusive inclusion. Methods, systems, products, or devices are not necessarily limited to those steps or units that are literally listed, but may include other steps or units that are not literally listed or that are inherent to such processes, methods, products, or devices.

It should be understood that, in the embodiments of this application, "at least one" means one or more, and "a plurality of" means two or more. The term "and/or" is used for describing an association relationship between associated objects, and represents that three relationships may exist. For example, "A and/or B" may represent the following three cases: Only A exists, only B exists, and both A and B exist, where A and B may be singular or plural. The character "/" generally indicates an "or" relationship between the associated objects. "At least one of the following" or a similar expression thereof indicates any combination of the following, including any combination of one or more of the following. For example, at least one of a, b, or c may indicate a, b, c, a and b, a and c, b and c, or a, b, and c, where a, b, and c may be singular or plural.

FIG. 1a and FIG. 1b are diagrams of examples of rotational symmetry structures according to an embodiment of this application. As shown in FIG. 1a, an interface of a connector (for example, a male end or a female end of the connector) includes N×M transmission channels (lane). One transmission channel (Qx_Ly) may be formed by one line (line) (K=1), one transmission channel (Qx_Ly) may alternatively be formed by a pair of differential lines (K=2), one transmission channel (Qx_Ly) may alternatively be formed by three lines (K=3), or one transmission channel (Qx_Ly) may alternatively be formed by more lines (K=n). A value of K is not specifically limited in this embodiment of this application. K lines corresponding to one transmission channel jointly transmit one valid signal. One line corresponds to one pin on the interface. In this embodiment of this application, the N×M transmission channels are rotationally symmetric. To be specific, a structure shown in FIG. 1b is obtained after a structure of the interface of the connector is flipped 180°. Compared with FIG. 1a, it can be learned that positions of Q4_Ly and Q2_Ly are exchanged, and positions of Q3_Ly and Q1_Ly are exchanged. Therefore, Q4_Ly and Q2_Ly are in a rotational symmetry relationship, and Q3_Ly and Q1_Ly are in a rotational symmetry relationship, where y=0, 1, 2, or 3.

For example, FIG. 2 is a diagram of an example structure of an interface of a connector according to an embodiment of this application. As shown in FIG. 2, the interface of the connector includes eight transmission channels (Q1_L0, Q1_L1, Q2_L0, Q2_L1, Q3_L0, Q3_L1, Q4_L0, and Q4_L1), where N=4, M=2, and K=1. It can be learned from arrangement positions of the eight transmission channels that Q4_Ly and Q2_Ly are in a rotational symmetry relationship, and Q3_Ly and Q1_Ly are in a rotational symmetry relationship, where y=0 or 1.

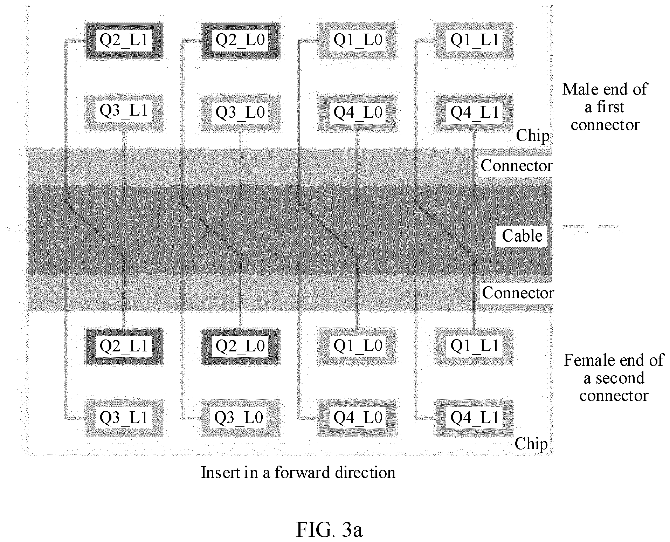

FIG. 3a is a schematic diagram of an example of a forward insertion manner according to this application. As shown in FIG. 3a, a male end of a first connector is inserted into a female end of a second connector in a forward direction, and both the male end of the first connector and the female end of the second connector use the structure shown in FIG. 2, including eight transmission channels (Q1_L0, Q1_L1, Q2_L0, Q2_L1, Q3_L0, Q3_L1, Q4_L0, and Q4_L1), where Q4_Ly and Q2_Ly are in a rotational symmetry relationship, and Q3_Ly and Q1_Ly are in a rotational symmetry relationship, and y=0 or 1.

After the male end of the first connector is inserted into the female end of the second connector in the forward direction, a connection is established between Q1_L0 of the male end of the first connector and Q1_L0 of the female end of the second connector, a connection is established between Q1_L1 of the male end of the first connector and Q1_L1 of the female end of the second connector, a connection is established between Q2 L0 of the male end of the first connector and Q2_L0 of the female end of the second connector, a connection is established between Q2_L1 of the male end of the first connector and Q2_L1 of the female end of the second connector, a connection is established between Q3_L0 of the male end of the first connector and Q3 L0 of the female end of the second connector, a connection is established between Q3 L1 of the male end of the first connector and Q3_L1 of the female end of the second connector, a connection is established between Q4 L0 of the male end of the first connector and Q4 L0 of the female end of the second connector, and a connection is established between Q4_L1 of the male end of the first connector and Q4_L1 of the female end.

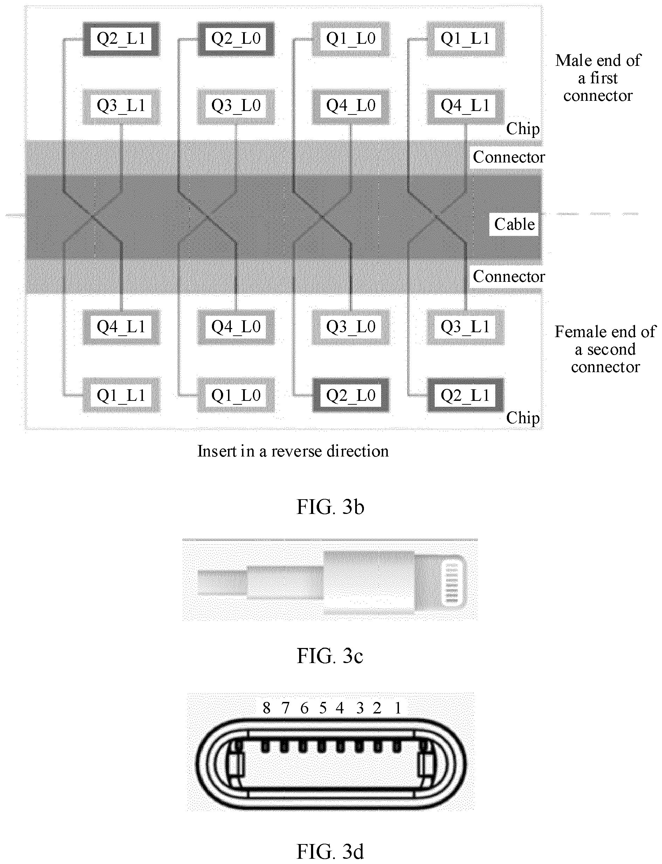

FIG. 3b is a schematic diagram of an example of a reverse insertion manner according to an embodiment of this application. As shown in FIG. 3b, a male end of a first connector is inserted into a female end of a second connector in a reverse direction, and both the male end of the first connector and the female end of the second connector use the structure shown in FIG. 2, including eight transmission channels (Q1_L0, Q1_L1, Q2_L0, Q2_L1, Q3_L0, Q3_L1, Q4_L0, and Q4_L1), where Q4_Ly and Q2_Ly are in a rotational symmetry relationship, Q3_Ly and Q1_Ly are in a rotational symmetry relationship, and y=0 or 1.

After the male end of the first connector is inserted into the female end of the second connector in the reverse direction, a connection is established between Q1_L0 of the male end of the first connector and Q3_L0 of the female end of the second connector, a connection is established between Q1_L1 of the male end of the first connector and Q3 L1 of the female end of the second connector, a connection is established between Q2 L0 of the male end of the first connector and Q4_L0 of the female end of the second connector, a connection is established between Q2 L 1 of the male end of the first connector and Q4_L1 of the female end of the second connector, a connection is established between Q3_L0 of the male end of the first connector and Q1 L0 of the female end of the second connector, a connection is established between Q3 L1 of the male end of the first connector and Q1 L1 of the female end of the second connector, a connection is established between Q4_L0 of the male end of the first connector and Q2_L0 of the female end of the second connector, and a connection is established between Q4_L1 of the male end of the first connector and Q2_L1 of the female end.

FIG. 3c is a schematic diagram of an example of a Type-C male end according to an embodiment of this application. As shown in FIG. 3c, a same signal cable is disposed on two sides of the male end. FIG. 3d is a schematic diagram of an example of a Type-C female end according to an embodiment of this application. As shown in FIG. 3d, a signal cable is disposed on only one side of the female end of the connector, and no signal cable is disposed on the other side. It can be learned that, for the Type-C interface, regardless of whether the male end is inserted into the female end in a forward direction or in a reverse direction, the signal cable on one side of the male end is always connected to the side on which the signal cable is disposed on the female end. In this way, the Type-C interface can be used normally. However, because the signal cable is disposed on only one side of the female end, even if a same signal cable is disposed on both sides of the male end, only one set of signal cables is actually working when the male end and the female end are connected (that is, when the connectors are working). Consequently, utilization of the signal cable of the Type-C interface is only 50%, and signal transmission efficiency is affected.

It can be learned that, compared with the Type-C interface, the plurality of transmission channels included in the interface of the connector are rotationally symmetric. Therefore, regardless of whether the male end is inserted into the female end in the forward direction or inserted into the female end in the reverse direction, the plurality of transmission channels included in the female end are all connected to a corresponding transmission channel in the male end. In this way, when the male end is connected to the female end (that is, when the connectors are working), all transmission channels are working, so that utilization of the transmission channels can reach 100%, thereby improving the signal transmission efficiency.

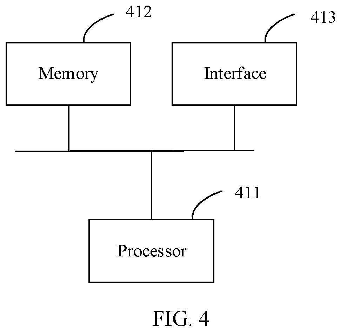

FIG. 4 is a diagram of an example structure of a connector according to an embodiment of this application. As shown in FIG. 4, the connector includes at least one processor 411, at least one memory 412, and at least one interface 413. The processor 411, the memory 412, and the interface 413 are connected, for example, by using a bus. In this embodiment of this application, the connection may be performed by using various types of interfaces, transmission lines, buses, or the like. This is not specifically limited in this embodiment of this application.

The processor 411 is mainly configured to: process a communication protocol and communication data, control the entire connector, execute a software program, and process data of the software program. The processor 411 may include one or more processing units. For example, the processor 411 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural processing unit (neural-network processing unit, NPU). Different processing units may be independent components, or may be integrated into one or more processors.

The memory 412 is mainly configured to store a software program and data. The memory 412 may exist independently (an independent storage element), and is connected to the processor 411. Optionally, the memory 412 and the processor 411 may be integrated together, for example, integrated in a chip (an on-chip memory element). The memory 412 may be configured to store computer-executable program code. The executable program code includes instructions. The memory 412 may include a program storage area and a data storage area. The program storage area may store an operating system, an application required by at least one function, and the like. In addition, the memory 412 may include a high-speed random access memory, and may further include a non-volatile memory, for example, at least one magnetic disk storage device, a flash memory device, or a universal flash storage (universal flash storage, UFS). The processor 411 runs the instructions stored in the memory 412 and/or the instructions stored in the memory disposed in the processor, to perform the technical solutions and data processing in the embodiments of this application.

The interface 413 is mainly configured to receive and/or send a signal. The interface 413 in this embodiment of this application may use a structure of the interface shown in any one of FIG. 1a to FIG. 2. The interface 413 may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, a high-definition multimedia interface (high-definition multimedia interface, HDMI), a mobile industry processor interface (mobile industry processor interface, MIPI), an interface shown in any one of the embodiments in FIG. 1a to FIG. 3b, and/or the like.

FIG. 4 shows only one memory, one processor, and one interface. In an actual connector, there may be a plurality of processors, a plurality of memories, and a plurality of interfaces. This is not specifically limited in this embodiment of this application.

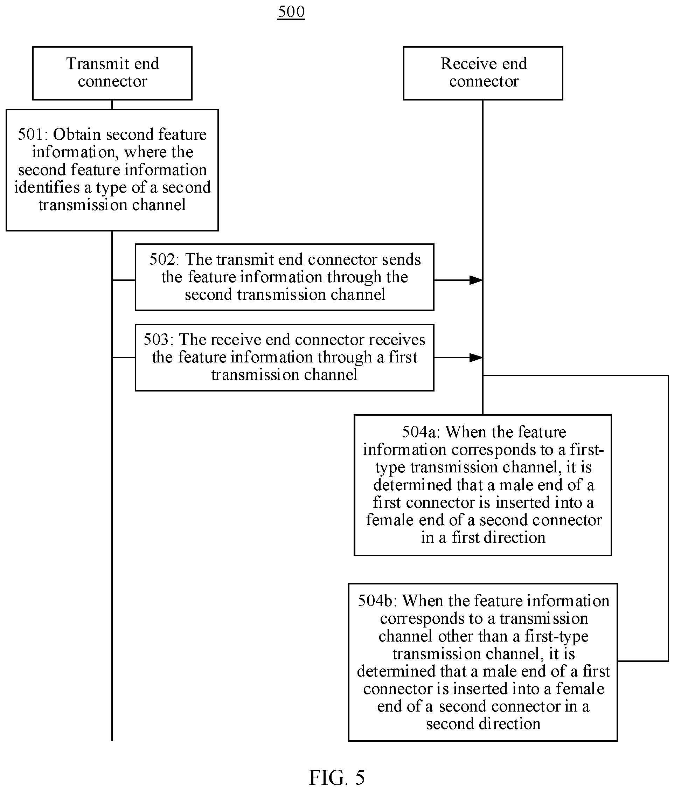

FIG. 5 is a flowchart of an example of a method for identifying an insertion manner of a connector according to an embodiment of this application. As shown in FIG. 5, a process 500 may be performed by a connector (including a transmit end connector and a receive end connector), for example, the connector shown in FIG. 4. The process 500 includes a series of steps or operations. It should be understood that the process 500 may be performed in various sequences and/or performed simultaneously, and is not limited to an execution sequence shown in FIG. 5.

The method in this embodiment of this application is applicable to a scenario in which a male end of a first connector is inserted into a female end of a second connector, but does not limit transmission directions of the first connector and the second connector. In other words, when the method for identifying an insertion manner of a connector provided in this embodiment of this application is implemented, the male end of the first connector (the transmit end connector) may send a signal, and the female end of the second connector (the receive end connector) may receive the signal, or the female end of the second connector (the transmit end connector) may send a signal, and the male end of the first connector (the receive end connector) may receive the signal. In addition, a plurality of transmission channels included in the male end of the first connector and a plurality of transmission channels included in the female end of the second connector are arranged in a same manner and are rotationally symmetric. This can ensure that all transmission channels of the first connector and the second connector can work normally regardless of whether the male end of the first connector is inserted into the female end of the second connector in a first direction or a second direction.

Step 501: The transmit end connector obtains second feature information, where the second feature information identifies a type of a second transmission channel.

The second transmission channel is any one of a plurality of transmission channels included in an interface of the transmit end connector. For example, as shown in FIG. 2, the interface of the connector includes eight transmission channels. To determine an insertion manner of two connectors, the transmit end connector may implement the following steps according to any one of the transmission channels. Optionally, the following steps may also be implemented according to eight (or less than eight) transmission channels. Regardless of how many transmission channels are selected, implementations of all transmission channels are the same. Therefore, one transmission channel (the second transmission channel) is used as an example below for description. For other transmission channels, reference may be made to the method. Details are not described again.

As described above, the interface of the transmit end connector is of a rotational symmetry structure. Therefore, the plurality of transmission channels included in the interface are separately classified into a first-type transmission channel or a second-type transmission channel based on a rotational symmetry relationship between the transmission channels. For example, as shown in FIG. 2, Q1_Ly and Q2_Ly are classified as first-type transmission channels, and Q3_Ly and Q4_Ly are classified as second-type transmission channels. Optionally, the plurality of transmission channels included in the interface may also be separately classified into a plurality of types. For example, as shown in FIG. 2, Q1_Ly is classified as a first-type transmission channel, Q2_Ly is classified as a second-type transmission channel, Q3_Ly is classified as a third-type transmission channel, and Q4_Ly is classified as a fourth-type transmission channel. In this embodiment of this application, the two rotationally symmetric transmission channels cannot be classified into a same type. For example, if Q1_L0 and Q3_L0 are rotationally symmetric, Q1_L0 and Q3_L0 need to be marked as different types; or if Q2_L1 and Q4_L1 are rotationally symmetric, Q2_L1 and Q4_L1 need to be marked as different types. Another policy for classification of types of the transmission channels is not specifically limited.

The feature information corresponds to the type of the second transmission channel, indicating that a value of the feature information is consistent with a preset identifier value identifying the type of the second transmission channel. For example, it is assumed that the type of the second transmission channel is the first-type transmission channel, and a preset value identifying the first-type transmission channel is 0011. When the value of the feature information is 0011, it is determined that the feature information corresponds to the type of the second transmission channel; or when the value of the feature information is not 0011, it is determined that the feature information does not correspond to the type of the second transmission channel. For another example, it is assumed that the type of the second transmission channel is the second-type transmission channel, and a preset value identifying the second-type transmission channel is 5A5A5A5A. When the value of the feature information is 5A5A5A5A, it is determined that the feature information corresponds to the type of the second transmission channel; or when the value of the feature information is not 5A5A5A5A, it is determined that the feature information does not correspond to the type of the second transmission channel.

In a possible implementation, the feature information may be carried in an existing signal.

Optionally, the feature information may be a sync header of a signal sent on the second transmission channel. For example, the signal includes two parts: the sync header (sync head) and data (data). For example, in FIG. 2, a preset value of the sync header used to identify the first-type transmission channel is 0011, and a preset value of the sync header used to identify the second type of transmission channel is 1010. Therefore, the transmit end connector may fill 0011 in a sync header of a signal sent on Q1_Ly or Q2_Ly, and fill 10 10 in a sync header of a signal sent on Q3_Ly and Q4_Ly.

Optionally, the feature information may alternatively be a handshake sequence sent on the second transmission channel. For example, the handshake sequence is a sequence sent before a connection is established between the transmit end connector and the receive end connector. For example, in FIG. 2, a preset value of the handshake sequence identifying the first-type transmission channel is 5A5A5A5A, and a preset value of the handshake sequence identifying the second-type transmission channel is 3C3C3C3C. Therefore, the transmit end connector may send the handshake sequence 5A5A5A5A on Q1_Ly or Q2_Ly and send the handshake sequence 3C3C3C3C on Q3_Ly and Q4_Ly.

Optionally, the feature information may alternatively be a heartbeat packet sent on the second transmission channel. For example, the heartbeat packet is a heartbeat detection packet periodically or irregularly sent between the transmit end connector and the receive end connector after a connection is established. For example, in FIG. 2, a preset value of the heartbeat packet identifying the first-type transmission channel is 5A5A5A5A, and a preset value of the heartbeat packet identifying the second-type transmission channel is 3C3C3C3C. Therefore, the transmit end connector may send the heartbeat packet 5A5A5A5A on Q1_Ly or Q2_Ly, and send the heartbeat packet 3C3C3C3C on Q3_Ly and Q4_Ly.

It should be noted that in this embodiment of this application, in addition to transmitting the feature information by using the foregoing three types of signals, the feature information may also be sent by using another existing signal. This is not specifically limited herein.

In a possible implementation, the feature information may be carried in a newly added signal in this embodiment of this application. In other words, a new signal is added between the transmit end connector and the receive end connector, and the feature information is transmitted by using the new signal. A format and a transmission mechanism of the newly added signal are not specifically limited in this embodiment of this application.

Step 502: The transmit end connector sends the feature information through the second transmission channel.

The transmit end connector may send the feature information on the second transmission channel. For an implementation of the feature information, refer to the foregoing several cases. The value of the feature information may correspond to the type of the second transmission channel. Details are not described herein again.

Step 503: The receive end connector receives the feature information through a first transmission channel.

The first transmission channel is any one of a plurality of transmission channels included in an interface of the receive end connector. For example, as shown in FIG. 2, the interface of the connector includes eight transmission channels. To determine an insertion manner of two connectors, the receive end connector may implement the following steps according to any one of the transmission channels. To be specific, the receive end connector may detect feature information received on only one transmission channel, to determine the insertion manner of the connector. Optionally, the following steps may also be implemented according to eight (or less than eight) transmission channels. To be specific, the connector may simultaneously detect a plurality of or even all transmission channels, receive feature information on one or more of the transmission channels, and then determine the insertion manner of the connector based on the feature information. Regardless of how many transmission channels are selected, implementations of all transmission channels are the same. Therefore, one transmission channel (the first transmission channel) is used as an example below for description. For other transmission channels, reference may be made to the method. Details are not described again. It should be noted that the first transmission channel and the second transmission channel in step 501 may be a same transmission channel, or may be different transmission channels. This is not specifically limited in this embodiment of this application.

Similarly, in this embodiment of this application, the interface of the receive end connector and the interface of the transmit end connector are of a rotational symmetry structure. Therefore, the plurality of transmission channels included in the interface may be separately classified into a first-type transmission channel or a second-type transmission channel based on a rotational symmetry relationship between the transmission channels. Optionally, the plurality of transmission channels included in the interface of the receive end connector may also be separately classified into a plurality of types. In this embodiment of this application, the two rotationally symmetric transmission channels cannot be classified into a same type. For example, if Q1_L0 and Q3_L0 are rotationally symmetric, Q1_L0 and Q3 L0 need to be marked as different types; or if Q2_L1 and Q4_L 1 are rotationally symmetric, Q2 _L1 and Q4_L1 need to be marked as different types. Another policy for classification of types of the transmission channels is not specifically limited.

The plurality of transmission channels included in the interface of the receive end connector and the plurality of transmission channels included in the interface of the transmit end connector may be classified according to a same policy. In other words, a type of any transmission channel in the interface of the transmit end connector is consistent with a type of the transmission channel in the interface of the receive end connector.

Step 504a: When the feature information corresponds to the first-type transmission channel, the receive end connector determines that the male end of the first connector is inserted into the female end of the second connector in a first direction.

Step 504b: When the feature information corresponds to a transmission channel other than the first-type transmission channel, the receive end connector determines that the male end of the first connector is inserted into the female end of the second connector in a second direction.

Step 504a and step 504b are optional and either-or steps. In other words, whether to perform step 504a or step 504b is determined according to the type of the transmission channel corresponding to the feature information.

When sending the feature information, the transmit end connector has assigned a value to the feature information according to the type of the second transmission channel. In this case, the receive end connector may distinguish, according to the value of the received feature information, a type of transmission channel from which the feature information comes. The plurality of transmission channels included in the interface of the receive end connector and the plurality of transmission channels included in the interface of the transmit end connector may be classified according to a same policy. When the type of the transmission channel (the second transmission channel) from which the feature information comes is consistent with the type of the transmission channel (the first transmission channel) that receives the feature information, it indicates that the male end of the first connector is inserted into the female end of the second connector in the first direction (for example, in a forward direction). When the type of the transmission channel (the second transmission channel) from which the feature information comes is inconsistent with the type of the transmission channel (the first transmission channel) that receives the feature information, it indicates that the male end is inserted into the female end of the second connector in the second direction (for example, in a reverse direction).

For example, FIG. 2 is used as an example. When the receive end connector receives, from Q1_Ly, a sync header whose feature information is 0011, it may be determined that the feature information is from the first-type transmission channel. Q1_Ly is the first-type transmission channel. Therefore, it may be determined that the male end of the first connector is inserted into the female end of the second connector in the first direction (for example, in the forward direction). Alternatively, when the receive end connector receives, from Q3_Ly, a sync header whose feature information is 0011, it may be determined that the feature information is from the first-type transmission channel. However, Q3_Ly is the second type of transmission channel. Therefore, it may be determined that the male end of the first connector is inserted into the female end of the second connector in the second direction (for example, in the reverse direction).

In other words, the receive end connector may classify, according to a same policy for classification of types as that of the transmit end connector, the plurality of transmission channels included in the interface. The value of the feature information is associated with a type of the transmission channel. Therefore, the value of the feature information transmitted on the first transmission channel by the receive end connector is expected. Therefore, if a value of actually received feature information (from the second transmission channel) is consistent with an expected value of the feature information, it indicates that the male end of the first connector is inserted into the female end in the first direction (for example, in the forward direction). If a value of actually received feature information (from the second transmission channel) is inconsistent with an expected value of the feature information, it indicates that the male end of the first connector is inserted into the female end of the second connector in the second direction (for example, in the reverse direction).

For example, FIG. 2 is used as an example. When the receive end connector receives, from Q1_Ly (the expected value of the feature information is 0011), a sync header whose feature information is 0011, it may be determined that the male end of the first connector is inserted into the female end of the second connector in the first direction (for example, in the forward direction). Alternatively, when the receive end connector receives, from Q3_Ly (the expected value of the feature information is 1010), a sync header whose feature information is 0011, it may be determined that the male end of the first connector is inserted into the female end of the second connector in the second direction (for example, in the reverse direction).

In this embodiment of this application, the plurality of transmission channels included in the interface of the connector are rotationally symmetric. Therefore, regardless of whether the male end is inserted into the female end in the forward direction or inserted into the female end in the reverse direction, the plurality of transmission channels included in the female end are all connected to a corresponding transmission channel in the male end. In this way, when the male end is connected to the female end (that is, when the connectors are working), all transmission channels are working, so that utilization of the transmission channels can reach 100%, thereby improving utilization of the transmission channels. According to the interface, in this embodiment of this application, the feature information having a specific value is transmitted on the transmission channel, and the value of the feature information represents the type of the transmission channel. If the value of the received feature information is consistent with the type of the transmission channel that receives the feature information, it may be determined that the male end of the first connector is inserted into the female end of the second connector in the first direction. If the value of the received feature information is inconsistent with the type of the transmission channel that receives the feature information, it may be determined that the male end of the first connector is inserted into the female end of the second connector in the second direction. The transmission channel may be any one of the plurality of transmission channels included in the interface, and there is no need to additionally set a dedicated transmission channel to transmit the feature information, so that signal transmission efficiency on the interface can be improved.

Several specific embodiments are used below to describe in detail the technical solution of the method embodiment shown in FIG. 5.

Embodiment 1: The feature information is a sync header of a signal.

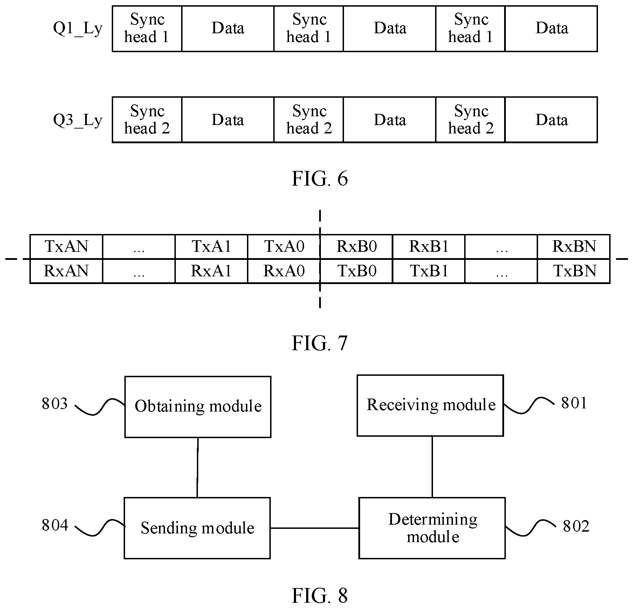

FIG. 2 is used as an example. Q1_Ly and Q2_Ly are classified as first-type transmission channels, and Q3_Ly and Q4_Ly are classified as second-type transmission channels. Q1_Ly and Q3_Ly are used as an example. FIG. 6 is a schematic diagram of an example of a signal according to an embodiment of this application. As shown in FIG. 6, the transmit end connector sends a sync head 1 as a sync header on Q1_Ly, and each sync header is followed by a segment of data; and sends a sync head 2 as a sync header on Q3 _Lx, and each sync header is followed by a segment of data. The receive end connector receives the feature information on Q1_Ly and Q3_Ly. If a sync header of a signal received on Q1_Ly is the sync head 1, and a sync header of a signal received on Q3_Ly is the sync head 2, it is determined that the male end of the first connector is inserted into the female end of the second connector in the forward direction; or if a sync header of a signal received on Q1_Ly is the sync head 2, and a sync header of a signal received on Q3_Ly is the sync head 1, it is determined that the male end of the first connector is inserted into the female end of the second connector in the reverse direction.

Embodiment 2: The feature information is a handshake sequence.

FIG. 7 is a diagram of an example structure of an interface according to an embodiment of this application. As shown in FIG. 7, a transmission channel in an interface has two directions, where Tx*y (y=0 to N) represents a transmit channel, and Rx*y (y=0 to N) represents a receive channel. TxAy and RxAy are classified as first-type transmission channels, and TxBy and RxBy are classified as second-type transmission channels. Before a connection is established, the transmit end connector sends a handshake sequence handshake_signal_A (0x0000FFFF_5A5A5A5A_FFFF0000) on TxAy and a handshake sequence handshake_signal_B (0x0000FFFF_3C3C3C3C_FFFF0000) on TxBy. The receive end connector receives the feature information from the RxAy and the RxBy. If the handshake sequence received on RxAy is handshake_signal_A, and the handshake sequence received on RxBy is handshake_signal_B, it is determined that the male end of the first connector is inserted into the female end of the second connector in the forward direction; or if the handshake sequence received on RxAy is handshake_signal B, and the handshake sequence received on RxBy is handshake_signal_A, it is determined that the male end of the first connector is inserted into the female end in the reverse direction.

Embodiment 3: The feature information is a heartbeat packet.

FIG. 7 is used as an example. After a connection is established, the transmit end connector sends a heartbeat packet heartbeat_signal_A (0x0000FFFF_5A5A5A5A_FFFF0000) on TxAy and a heartbeat packet heartbeat_signal_B (0x0000FFFF_3C3C3C3C_FFFF0000) on TxBy. The receive end connector receives the feature information from RxAy and RxBy. If the heartbeat packet received on RxAy is heartbeat_signal_A, and the heartbeat packet received on RxBy is heartbeat_signal_B, it is determined that the male end of the first connector is inserted into the female end of the second connector in the forward direction; or if the heartbeat packet received on RxAy is heartbeat_signal_B, and the heartbeat packet received on RxBy is heartbeat_signal_A, it is determined that the male end of the first connector is inserted into the female end in the reverse direction.

FIG. 8 is a schematic diagram of an example structure of a connection apparatus according to an embodiment of this application. As shown in FIG. 8, the connection apparatus in this embodiment may be applied to the first connector or the second connector in the foregoing embodiment, for example, the connector shown in FIG. 4. The connection apparatus includes: a receiving module 801, a determining module 802, an obtaining module 803, and a sending module 804.

The receiving module 801 is configured to receive first feature information through a first transmission channel, where the first transmission channel is any one of a plurality of transmission channels included in the interface of the connector, the first transmission channel is a first-type transmission channel, the plurality of transmission channels are rotationally symmetric, and the interface of the connector is a male end of a first connector or a female end of a second connector. The determining module 802 is configured to: when the first feature information corresponds to the first-type transmission channel, determine that the male end of the first connector is inserted into the female end of the second connector in a first direction; or when the first feature information does not correspond to the first-type transmission channel, determine that the male end of the first connector is inserted into the female end of the second connector in a second direction, where the first direction is opposite to the second direction.

In a possible implementation, the first feature information is a sync header of a signal received on the first transmission channel, the first feature information is a handshake sequence received on the first transmission channel, or the first feature information is a heartbeat packet received on the first transmission channel.

In a possible implementation, the first feature information corresponds to the first-type transmission channel, indicating that a value of the first feature information is consistent with a preset identifier value identifying a type of the first-type transmission channel.

In a possible implementation, the apparatus further includes: the obtaining module 803, configured to obtain second feature information, where the second feature information identifies a type of a second transmission channel, and the second transmission channel is any one of the plurality of transmission channels; and the sending module 804, configured to send the second feature information by using the second transmission channel.

In a possible implementation, the second feature information is a sync header of a signal sent on the second transmission channel, the second feature information is a handshake sequence sent on the second transmission channel, or the second feature information is a heartbeat packet sent on the second transmission channel.

In a possible implementation, the sending module 804 is specifically configured to: when the second transmission channel is the first-type transmission channel, send, through the second transmission channel, the second feature information corresponding to the first-type transmission channel; or when the second transmission channel is a second-type transmission channel, send, through the second transmission channel, the second feature information corresponding to the second-type transmission channel.

In a possible implementation, the plurality of transmission channels included in the male end of the first connector and the plurality of transmission channels included in the female end of the second connector are classified according to a same policy.

The apparatus in this embodiment may be used to perform the technical solutions of the method embodiment shown in FIG. 5. The implementation principles and technical effects are similar. Details are not described herein again.

In an implementation process, steps in the foregoing method embodiments can be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The general-purpose processor may be a microprocessor, or the processor may be any conventional processor or the like. The steps of the methods disclosed in embodiments of this application may be directly presented as being performed and completed by a hardware encoder processor, or performed and completed by a combination of hardware and a software module in an encoder processor. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

The memory in the foregoing embodiments may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory in the systems and methods described in this specification includes but is not limited to these and any memory of another proper type.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of embodiments of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in embodiments of this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts described as units may be located in one position, or may be distributed on a plurality of units. Some or all of the units may be selected according to actual requirements to achieve the objectives of the solutions of embodiments.

In addition, functional units in embodiments of this application may be integrated into one processing unit, or each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (a personal computer, a server, or a network device) to perform all or some of the steps of the methods described in embodiments of this application The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A method for identifying an insertion manner of a connector, wherein the method comprises:
receiving first feature information through a first transmission channel, wherein the first transmission channel is any one of a plurality of transmission channels comprised in an interface of the connector, the first transmission channel is a first-type transmission channel, the plurality of transmission channels are rotationally symmetric, and the interface of the connector is a male end of a first connector or a female end of a second connector; and
when the first feature information corresponds to the first-type transmission channel, determining that the male end of the first connector is inserted into the female end of the second connector in a first direction; or
when the first feature information does not correspond to the first-type transmission channel, determining that the male end of the first connector is inserted into the female end of the second connector in a second direction, wherein
the first direction is opposite to the second direction.

2. The method according to claim 1, wherein the first feature information is a sync header of a signal received on the first transmission channel, the first feature information is a handshake sequence received on the first transmission channel, or the first feature information is a heartbeat packet received on the first transmission channel.

3. The method according to claim 1 or 2, wherein the first feature information corresponds to the first-type transmission channel, indicating that a value of the first feature information is consistent with a preset identifier value identifying a type of the first-type transmission channel.

4. The method according to any one of claims 1 to 3, wherein the method further comprises:
obtaining second feature information, wherein the second feature information identifies a type of a second transmission channel, and the second transmission channel is any one of the plurality of transmission channels; and
sending the second feature information through the second transmission channel.

5. The method according to claim 4, wherein the second feature information is a sync header of a signal sent on the second transmission channel, the second feature information is a handshake sequence sent on the second transmission channel, or the second feature information is a heartbeat packet sent on the second transmission channel.

6. The method according to claim 4 or 5, wherein the sending the second feature information through the second transmission channel comprises:
when the second transmission channel is the first-type transmission channel, sending, through the second transmission channel, the second feature information corresponding to the first-type transmission channel; or
when the second transmission channel is a second-type transmission channel, sending, through the second transmission channel, the second feature information corresponding to the second-type transmission channel.

7. The method according to any one of claims 1 to 6, wherein the plurality of transmission channels comprised in the male end of the first connector and the plurality of transmission channels comprised in the female end of the second connector are classified according to a same policy.

8. A method for identifying an insertion manner of a connector, wherein the method comprises:
obtaining second feature information, wherein the second feature information identifies a type of a second transmission channel, the second transmission channel is any one of a plurality of transmission channels comprised in an interface of the connector, the plurality of transmission channels are rotationally symmetric, and the interface of the connector is a male end of a first connector or a female end of a second connector; and
sending the second feature information through the second transmission channel.

9. The method according to claim 8, wherein the plurality of transmission channels comprised in the male end of the first connector and the plurality of transmission channels comprised in the female end of the second connector are classified according to a same policy.

10. The method according to claim 8 or 9, wherein the method further comprises:
receiving first feature information through a first transmission channel, wherein the first transmission channel is any one of the plurality of transmission channels, and the first transmission channel is a first-type transmission channel; and
when the first feature information corresponds to the first-type transmission channel, determining that the male end of the first connector is inserted into the female end of the second connector in a first direction; or
when the first feature information does not correspond to the first-type transmission channel, determining that the male end of the first connector is inserted into the female end of the second connector in a second direction, wherein
the first direction is opposite to the second direction.

11. A connection apparatus, comprising:
a receiving module, configured to receive first feature information through a first transmission channel, wherein the first transmission channel is any one of a plurality of transmission channels comprised in an interface of a connector, the first transmission channel is a first-type transmission channel, the plurality of transmission channels are rotationally symmetric, and the interface of the connector is a male end of a first connector or a female end of a second connector; and
a determining module, configured to: when the first feature information corresponds to the first-type transmission channel, determine that the male end of the first connector is inserted into the female end of the second connector in a first direction; or when the first feature information does not correspond to the first-type transmission channel, determine that the male end of the first connector is inserted into the female end of the second connector in a second direction, wherein the first direction is opposite to the second direction.

12. The apparatus according to claim 11, wherein the first feature information is a sync header of a signal received on the first transmission channel, the first feature information is a handshake sequence received on the first transmission channel, or the first feature information is a heartbeat packet received on the first transmission channel.

13. The apparatus according to claim 11 or 12, wherein the first feature information corresponds to the first-type transmission channel, indicating that a value of the first feature information is consistent with a preset identifier value identifying a type of the first-type transmission channel.

14. The apparatus according to any one of claims 11 to 13, wherein the apparatus further comprises:
an obtaining module, configured to obtain second feature information, wherein the second feature information identifies a type of a second transmission channel, and the second transmission channel is any one of the plurality of transmission channels; and a sending module, configured to send the second feature information through the second transmission channel.

15. The apparatus according to claim 14, wherein the second feature information is a sync header of a signal sent on the second transmission channel, the second feature information is a handshake sequence sent on the second transmission channel, or the second feature information is a heartbeat packet sent on the second transmission channel.

16. The apparatus according to claim 14 or 15, wherein the sending module is specifically configured to: when the second transmission channel is the first-type transmission channel, send, through the second transmission channel, the second feature information corresponding to the first-type transmission channel; or when the second transmission channel is a second-type transmission channel, send, through the second transmission channel, the second feature information corresponding to the second-type transmission channel.

17. The apparatus according to any one of claims 11 to 16, wherein the plurality of transmission channels comprised in the male end of the first connector and the plurality of transmission channels comprised in the female end of the second connector are classified according to a same policy.

18. A connection apparatus, comprising:
an obtaining module, configured to obtain second feature information, wherein the second feature information identifies a type of a second transmission channel, the second transmission channel is any one of a plurality of transmission channels comprised in an interface of a connector, the plurality of transmission channel s are rotationally symmetric, and the interface of the connector is a male end of a first connector or a female end of a second connector; and a sending module, configured to send the second feature information through the second transmission channel.

19. The apparatus according to claim 18, wherein the plurality of transmission channels comprised in the male end of the first connector and the plurality of transmission channels comprised in the female end of the second connector are classified according to a same policy.

20. The apparatus according to claim 18 or 19, wherein the apparatus further comprises:
a receiving module, configured to receive first feature information through a first transmission channel, wherein the first transmission channel is any one of the plurality of transmission channels, and the first transmission channel is a first-type transmission channel; and
a determining module, configured to: when the first feature information corresponds to the first-type transmission channel, determine that the male end of the first connector is inserted into the female end of the second connector in a first direction; or when the first feature information does not correspond to the first-type transmission channel, determine that the male end of the first connector is inserted into the female end of the second connector in a second direction, wherein the first direction is opposite to the second direction.

21. A connector, comprising a processor and an interface, wherein
the interface is configured to send or receive a signal; and
the processor is configured to invoke one or more programs stored in a memory, to implement the method according to any one of claims 1 to 10.

22. A computer-readable storage medium, comprising a program instruction, wherein when the program instruction is executed on a computer or a processor, the computer or the processor is enabled to perform the method according to any one of claims 1 to 10.

23. A computer program product, comprising a program instruction, wherein when the program instruction is executed by a computer or a processor, the computer or the processor is configured to perform the method according to any one of claims 1 to 10.
